# EUROPÄISCHE PATENTSCHRIFT

(11) **EP 4 149 818 B1**
(45) Veröffentlichungstag und Bekanntmachung des Hinweises auf die Patenterteilung: **07.10.2026**
(21) Anmeldenummer: 21739567.2
(22) Anmeldetag: 21.06.2021
(51) Int. Cl.: B61L 23/04, B61L 29/30

(54) **VERFAHREN ZUM ÜBERWACHEN EINES GEFAHRENRAUMES UND ÜBERWACHUNGSVORRICHTUNG**
METHOD FOR MONITORING A DANGER AREA AND MONITORING DEVICE
PROCÉDÉ POUR CONTRÔLER UNE ZONE DE DANGER ET DISPOSITIF DE CONTRÔLE

(30) Priorität: 17.07.2020 DE 102020208955
(43) Veröffentlichungstag der Anmeldung: 22.03.2023
(73) Patentinhaber: Siemens Mobility GmbH, 80997 München (DE)
(72) Erfinder: BRABAND, Jens, 38106 Braunschweig (DE)
(74) Vertreter: Siemens Patent Attorneys
(86) Internationale Anmeldenummer: PCT/EP2021/066724
(87) Internationale Veröffentlichungsnummer: WO 2022/012861

(56) Entgegenhaltungen:
- DE-A1- 102017 209 766
- DE-A1- 102018 200 466
- US-A1- 2020 166 624
- MOUSTAFA YOUSSEF ET AL: "Challenges: Device-free Passive Localization for WirelessEnvironments", ACM INTERNATIONAL CONFERENCE ON MOBILE COMPUTING AND NETWORKING, September 2007 (2007-09-01), pages 222 - 229, XP058405854
- HUI LIN ET AL: "UWB, Multi-sensors and Wifi-Mesh based precision positioning for urban rail traffic", UBIQUITOUS POSITIONING INDOOR NAVIGATION AND LOCATION BASED SERVICE, 14 October 2010 (2010-10-14), pages 1 - 8, XP031815187
- WANG TIANJIE ET AL: "WiFi positioning algorithm in tunnel based on Fuzzy C-means clustering and KNN algorithm", IEEE CHINESE AUTOMATION CONGRESS, November 2019 (2019-11-01), pages 567 - 571, XP033711723

## Beschreibung

Die Erfindung betrifft ein Verfahren zum Überwachen eines Gefahrenraumes einer eisenbahntechnischen Anlage, bei dem wenigstens ein Funkmodul im Gefahrenraum oder in der Nähe des Gefahrenraums angeordnet wird, bei dem Funksignale von dem Funkmodul ausgesendet werden, bei dem Funksignale von dem Funkmodul empfangen und ausgewertet werden.

Weiterhin betrifft die Erfindung eine Überwachungsvorrichtung für ein Gefahrenraum mit wenigstens einem Funkmodul, das im Gefahrenraum anordenbar und zum Aussenden und Empfangen von Funksignalen ausgebildet ist, und mit wenigstens einer Auswerteeinrichtung, die zum Auswerten der empfangenen Funksignale ausgebildet ist.

In eisenbahntechnischen Anlagen gibt es bestimmte Bereiche, bei denen sichergestellt sein muss, dass sie frei von Hindernissen oder Objekten wie beispielsweise Menschen sind. Diese Bereiche können als Gefahrenräume bezeichnet werden und können sich beispielsweise in Tunneln, auf Bahnsteigen, an Bahnübergängen oder ähnlichem befinden.

Zur Überwachung dieser Gefahrenräume können selbstverständlich zusätzliche Sensoren wie beispielsweise Radarscanner eingesetzt werden. Dies ist allerdings sehr kostenaufwendig. Es können auch Kameras eingesetzt werden, die aber den Nachteil haben, dass sie üblicherweise von Menschen überwacht werden müssen, da hier KI-Algorithmen noch nicht ausreichend zuverlässig sind und nicht die erforderliche Sicherheit bieten.

Aus der WO 2018/224318 A1 und der WO 2019/137798 A1 sind Verfahren zur Überwachung eines Gefahrenraumes eines Bahnüberganges bekannt.

Aus der US 2020/0166624 A1 ist ein Verfahren zur UWBbasierten Personenerkennung in U-Bahnen bekannt.

Die Nutzung von Funkmodulen ist auch aus folgenden Veröffentlichungen bekannt:
Halperin, Daniel u. a.: "Tool Release: Gathering 802.11n Traces with Channel State Information"; ACM SIGCOMM CCR 41.1 (2011), Seite 53;
Hsieh, Chaur-Heh; Chen, Jen-Yang und Nien, Bo-Hong: "Deep Learning-Based Indoor Localization Using Received Signal Strength and Channel State Information", IEEE Access (2019);
Zhang, Jin u. a.: "WiFi-ID: Human Identification using WiFi signal", 2016 International Conference on Distributed Computing in Sensor Systems (2016).

Der vorliegenden Erfindung liegt die Aufgabe zugrunde, ein Verfahren und eine Vorrichtung der eingangs genannten Art bereitzustellen, die kostengünstig und automatisiert verwendbar sind.

Die Aufgabe wird erfindungsgemäß durch das Verfahren nach Anspruch 1 gelöst.

Die Aufgabe wird ferner erfindungsgemäß durch die Vorrichtung nach Anspruch 9 gelöst.

Die erfindungsgemäße Lösung hat den Vorteil, dass hierfür auch bereits vorhandene Funkmodule wie beispielsweise WLAN-Module der eisenbahntechnischen Anlage verwendet werden können und die Auswertung der Funksignale so angelernt werden kann, dass beispielsweise ständig im Gefahrenraum befindliche ungefährliche Hindernisse nicht berücksichtigt werden.

Erfindungsgemäß wird nach einer ausgelösten Reaktion geprüft, ob eine geplante Verletzung des Gefahrenraumes vorliegt. Die geplante Verletzung kann beispielsweise durch einen durch den Gefahrenraum fahrenden Zug ausgelöst werden, die selbstverständlich eine geplante Verletzung darstellt und keine weitere Reaktion in Form eines Alarms auslösen soll.

Die erfindungsgemäße Lösung kann durch vorteilhafte Ausgestaltungen weiterentwickelt werden, die im Folgenden beschrieben sind.

So kann anhand eines Fahrplans der eisenbahntechnischen Anlage geprüft werden, ob eine geplante Verletzung des Gefahrenraumes vorliegt. So kann auf besonders einfache Art geprüft werden, ob die Verletzung des Gefahrenraumes geplant ist.

Um den Gefahrenraum möglichst umfassend überwachen zu können, können mehrere Funkmodule angeordnet und ausgewertet werden. Dabei können die Funkmodule entweder auf derselben Seite des Gefahrenraumes angeordnet werden oder auf gegenüberliegenden Seiten des Gefahrenraumes. Bei gegenüberliegend angeordneten Funkmodulen kann wenigstens ein Funkmodul solche Funksignale empfangen und auswerten, die es nicht selbst ausgesendet hat. Dies hat den Vorteil, dass die Gefahrenraumüberwachung nicht auf reflektierte Funksignale angewiesen ist.

In einer besonders vorteilhaften Ausgestaltung kann als Funkmodul wenigstens ein WLAN-Router verwendet werden. Dies hat den Vorteil, dass WLAN-Router häufig bereits vorhanden sind, beispielsweise in Tunneln und bei CBTC Systemen, und ansonsten auch kostengünstig verfügbar sind.

Um eine Ausfalloffenbarung zu überprüfen, kann zum Prüfen der Funktionsfähigkeit des wenigstens einen Funkmoduls überwacht werden, ob bei einer geplanten Verletzung des Gefahrenraumes der Grenzwert überschritten wird. Falls dies nicht der Fall ist, müsste eine Überprüfung stattfinden, da dann von einem Fehler ausgegangen werden kann.

In einer vorteilhaften Ausgestaltung der erfindungsgemäßen Überwachungsvorrichtung kann diese zum Ausführen des erfindungsgemäßen Verfahrens nach einer der zuvor genannten Ausführungsformen ausgebildet sein.

Weiterhin betrifft die Erfindung auch eine eisenbahntechnische Anlage, die eine Überwachungsvorrichtung nach einer der zuvor genannten Ausführungsformen umfasst.

In einer der zuvor genannten Weiterbildungen der erfindungsgemäßen eisenbahntechnischen Anlage kann das wenigstens eine Funkmodul der Überwachungseinrichtung in einem Tunnel der eisenbahntechnischen Anlage angeordnet sein und der Tunnel zumindest abschnittsweise den überwachten Gefahrenraum ausbildet. Ein Tunnel stellt insbesondere im Nahverkehrsbereich, wo die Tunnel häufig sehr eng sind, einen sehr kritischen Bereich dar, der in jedem Fall frei von Personen gehalten werden muss.

Des Weiteren wird ein Computerprogrammprodukt mit Programmbefehlen zur Durchführung des genannten erfindungsgemäßen Verfahrens und/oder dessen Ausführungsbeispielen beansprucht, wobei mittels des Computerprogrammprodukts jeweils das erfindungsgemäße Verfahren und/oder dessen Ausführungsbeispiele durchführbar sind.

Darüber hinaus wird eine Bereitstellungsvorrichtung zum Speichern und/oder Bereitstellen des Computerprogrammprodukts beansprucht. Die Bereitstellungsvorrichtung ist beispielsweise ein Datenträger, der das Computerprogrammprodukt speichert und/oder bereitstellt. Alternativ und/oder zusätzlich ist die Bereitstellungsvorrichtung beispielsweise ein Netzwerkdienst, ein Computersystem, ein Serversystem, insbesondere ein verteiltes Computersystem, ein cloudbasiertes Rechnersystem und/oder virtuelles Rechnersystem, welches das Computerprogrammprodukt vorzugsweise in Form eines Datenstroms speichert und/oder bereitstellt.

Die Bereitstellung erfolgt beispielsweise als Download in Form eines Programmdatenblocks und/oder Befehlsdatenblocks, vorzugsweise als Datei, insbesondere als Downloaddatei, oder als Datenstrom, insbesondere als Downloaddatenstrom, des vollständigen Computerprogrammprodukts. Diese Bereitstellung kann beispielsweise aber auch als partieller Download erfolgen, der aus mehreren Teilen besteht und insbesondere über ein Peer-to-Peer Netzwerk heruntergeladen oder als Datenstrom bereitgestellt wird. Ein solches Computerprogrammprodukt wird beispielsweise unter Verwendung der Bereitstellungsvorrichtung in Form des Datenträgers in ein System eingelesen und führt die Programmbefehle aus, sodass das erfindungsgemäße Verfahren auf einem Computer zur Ausführung gebracht wird.

Im Folgenden wird die Erfindung mit Bezug auf die beigefügten Zeichnungen näher erläutert.

Es zeigen:
- Figur 1: eine schematische Darstellung einer ersten beispielhaften Ausführungsform einer eisenbahntechnischen Anlage mit einer erfindungsgemäßen Überwachungsvorrichtung;
- Figur 2: eine schematische Darstellung einer zweiten beispielhaften Ausführungsform einer eisenbahntechnischen Anlage mit einer erfindungsgemäßen Überwachungsvorrichtung.

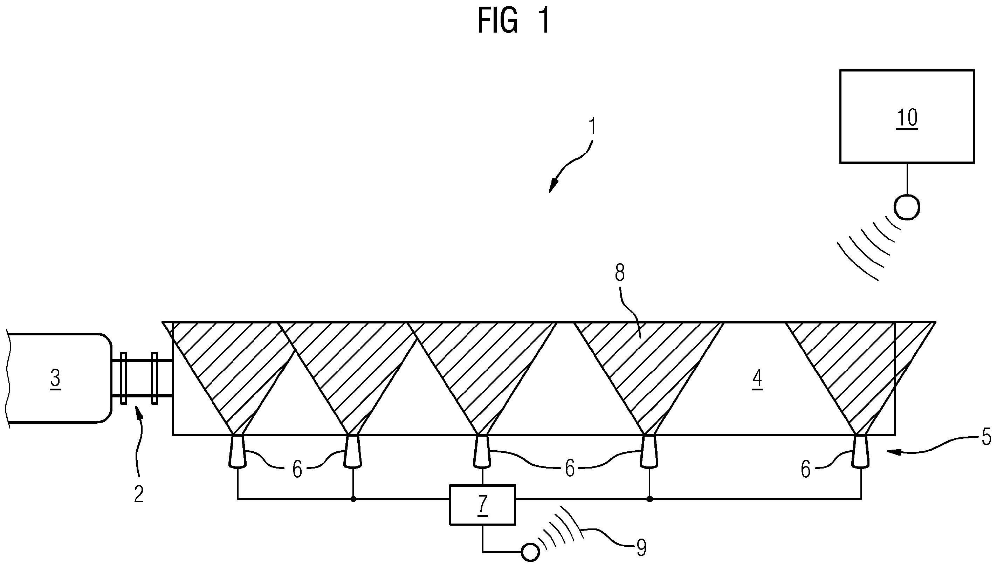

Zunächst wird die Erfindung anhand der beispielhaften Ausführungsform in Fig. 1 erläutert. Eine beispielhafte Ausführungsform einer erfindungsgemäßen eisenbahntechnischen Anlage 1 umfasst eine Fahrstrecke 2, ein Schienenfahrzeug 3, einen Tunnel 4 und eine Überwachungsvorrichtung 5. Die Überwachungsvorrichtung 5 weist mehrere Funkmodule 6 und eine mit den Funkmodulen 6 verbundene Auswerteeinrichtung 7 auf. Die Funkmodule 6 sind in der beispielhaften Ausführungsform in Fig. 1 alles WLAN-Router. Die Überwachungsvorrichtung 5 ist zum Überwachen eines schraffiert dargestellten Gefahrenraumes 8 ausgebildet, der in der beispielhaften Ausführungsform in Fig. 1 sich in dem Tunnel 4 befindet. Mit der Überwachungsvorrichtung 5 können auch andere Gefahrenräume der eisenbahntechnischen Anlage 1 überwacht werden, wie z. B. Bahnübergänge oder Bereiche von Bahnsteigen.

Die Funkmodule 6, die als WLAN-Router ausgebildet sind, sind in dem Tunnel 4 angeordnet und senden im Betrieb Funksignale aus und empfangen auch Funksignale. Die empfangenen Funksignale können entweder von dem Funkmodul 6 stammen, das sie auch ausgesendet hat, oder auch von anderen Funkmodulen 6. Die Funksignale werden an den Wänden des Tunnels in vorteilhafter Weise reflektiert. Die erfindungsgemäße Überwachungsvorrichtung 5 eignet sich daher besonders für die Überwachung von in geschlossenen Räumen befindlichen Gefahrenräumen. Die Funkmodule 6 geben an die verbundene Auswerteeinrichtung 7 jeweils ein Signal weiter, das für die empfangenen Funksignale repräsentativ ist. Die Auswerteeinrichtung 7 wertet im Betrieb die empfangenen Funksignale von den Funkmodulen 6 aus.

Bei einer Inbetriebnahme der erfindungsgemäßen Überwachungsvorrichtung 5 wird ein Muster der empfangenen Funksignale in einem Grundzustand des Gefahrenraumes 8 ermittelt. Danach ermittelt die Auswerteeinrichtung 7 Unterschiede zu dem Muster im Grundzustand. Solche Unterschiede entstehen, wenn ein zusätzlicher Gegenstand, wie beispielsweise das Schienenfahrzeug 3 oder eine Person, sich in dem Gefahrenraum 8 befindet oder diesen durchfährt. Die Auswerteeinrichtung 7 löst anschließend eine geplante Reaktion aus, wenn die ermittelten Unterschiede zu dem Muster im Grundzustand einen vorbestimmten Grenzwert übersteigen. Diese Reaktion ist bei der beispielhaften Ausführungsform in Fig. 1 beispielsweise ein Alarmsignal 9, das an eine Leitstelle 10 der eisenbahntechnischen Anlage 1 übermittelt wird. In der Leitstelle 10 wird anschießend überprüft, wie das Alarmsignal 9 zu bewerten ist und wie der Betriebsablauf gegebenenfalls geändert werden muss. Beispielsweise überprüft die Leitstelle 10 anhand eines Fahrplans der eisenbahntechnischen Anlage 1, ob das Schienenfahrzeug 3 zum Zeitpunkt des Alarmsignals 9 planmäßig den Tunnel 4 durchfahren sollte. Wenn dies der Fall ist, liegt eine berechtigte Verletzung des Gefahrenraumes 8 vor und es müssen beispielsweise keine zusätzlichen Maßnahmen im Betriebsablauf ergriffen werden.

Weiterhin kann hierbei die Ausfalloffenbarung der eisenbahntechnischen Anlage 1 überprüft werden. Zu dem fahrplanmäßigen Zeitpunkt des Passierens des Schienenfahrzeugs 3 durch den Tunnel 4 muss innerhalb eines vorbestimmten Zeitfensters das Alarmsignal 9 bei der Leitstelle 10 eingehen. Wenn dies nicht erfolgt, liegt ggf. eine Störung der Überwachungsvorrichtung 5 vor. In dem Fall wird beispielsweise eine Überprüfung der Überwachungsvorrichtung 5 und gegebenenfalls ein Sperren des Tunnels 4 eingeleitet. Erfindungsgemäß wird so eine sehr einfache Ausfalloffenbarung durch Beobachtung und Auswertung der Überwachungsvorrichtung 5 unter Einbeziehung der Betriebsabläufe im Gefahrenraum 8 ermöglicht. Dies wird an der Leitstelle 10 durchgeführt, die dadurch verschiedene Zuverlässigkeits- und Sicherheitsanforderungen erfüllt.

Als Funksignale der Funkmodule 6 können spezielle Testnachrichten bzw. Testsignale verwendet werden, die von den Funkmodulen 6 erzeugt werden können und für die Detektion von Gegenständen im Gefahrenraum 8 geeignet sind.

Vorteilhafterweise werden für die erfindungsgemäße Überwachungsvorrichtung 5 bereits vorhandene Funkmodule 6 verwendet, die beispielsweise Teil einer vorhandenen Zugsicherungseinrichtung der eisenbahntechnischen Anlage 1 sind. Beispielsweise können Funkmodule 6 von bekannten Einrichtungen wie Sitraffic EsCos RSU oder dem Radio Communication System Airlink hierfür verwendet werden, so dass für die erfindungsgemäße Überwachungsvorrichtung 5 keine oder wenig zusätzliche Hardware benötigt wird.

Selbstverständlich kann die erfindungsgemäße Überwachungsvorrichtung 5 auch andere Gefahrenräume 8 als den Tunnel 4 in Fig. 1 überwachen, wie beispielsweise Gleise an Bahnsteigen, Betriebsräume oder Bahnübergänge.

Der Tunnel 4 der beispielhaften Ausführungsform in Fig. 1 eignet sich besonders für die erfindungsgemäße Überwachungsvorrichtung 5, weil er einen gegenüber der Umwelt im Wesentlichen abgeschlossenen Bereich darstellt und die von den Funkmodulen 6 ausgesendeten Funksignale reflektiert. Durch die Reflexion ist es möglich, dass bei der beispielhaften Ausführungsform in Fig. 1 die Funkmodule 6 ausschließlich auf derselben Seite des Gefahrenraumes 8 angeordnet sind.

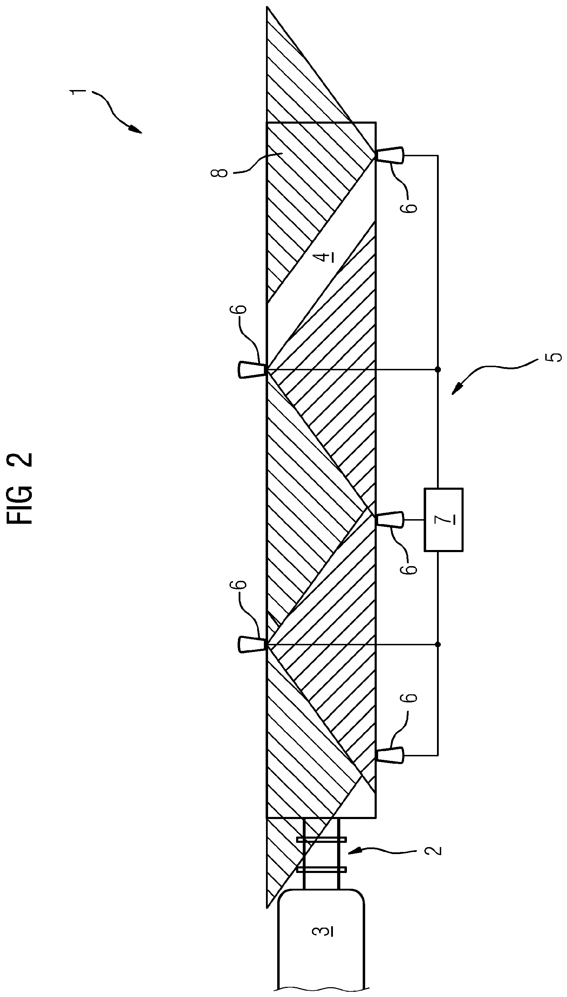

Im Folgenden wird die Erfindung mit Bezug auf die beispielhafte Ausführungsform in Fig. 2 erläutert. Der Einfachheit halber wird lediglich auf die Unterschiede zu der Ausführungsform in Fig. 1 eingegangen.

Im Gegensatz zu der Ausführungsform in Fig. 1 sind bei der beispielhaften Ausführungsform in Fig. 2 die Funkmodule 6 der Überwachungsvorrichtung 5 an gegenüberliegenden Seiten des Gefahrenraumes 8 bzw. des Tunnels 4 angeordnet. Dies hat den Vorteil, dass auch Funksignale von gegenüberliegenden Funkmodulen 6 empfangen werden können. Hierdurch ist es nicht notwendig, dass die Funksignale der Funkmodule 6 an den Wänden des Tunnels 4 reflektiert werden. Zusätzlich kann dies aber selbstverständlich auch geschehen.

## Patentansprüche

1. Verfahren zum Überwachen eines Gefahrenraumes (8) einer eisenbahntechnischen Anlage (1),
bei dem wenigstens ein Funkmodul (6) im Gefahrenraum (8) oder in der Nähe des Gefahrenraums (8) angeordnet wird,
bei dem Funksignale von dem Funkmodul (6) ausgesendet werden, bei dem Funksignale von dem Funkmodul (6) empfangen und ausgewertet werden,
wobei ein Muster der empfangenen Funksignale in einem Grundzustand des Gefahrenraums (8) ermittelt wird und
beim Auswerten der Funksignale Unterschiede zu dem Muster im Grundzustand ermittelt werden und eine Reaktion ausgelöst wird, wenn die ermittelten Unterschiede einen vorbestimmten Grenzwert übersteigen,
**dadurch gekennzeichnet, dass**
nach einer ausgelösten Reaktion geprüft wird, ob eine geplante Verletzung des Gefahrenraums (8) vorliegt.

2. Verfahren nach Anspruch 1,
**dadurch gekennzeichnet, dass**
anhand eines Fahrplans der eisenbahntechnischen Anlage (1) geprüft wird, ob eine geplante Verletzung des Gefahrenraums (8) vorliegt.

3. Verfahren nach einem der oben genannten Ansprüche,
**dadurch gekennzeichnet , dass**
mehrere Funkmodule (6) angeordnet und ausgewertet werden.

4. Verfahren nach Anspruch 3,
**dadurch gekennzeichnet, dass**
die Funkmodule (6) auf derselben Seite des Gefahrenraums (8) angeordnet werden.

5. Verfahren nach Anspruch 3,
**dadurch gekennzeichnet, dass**
die Funkmodule (6) auf gegenüberliegenden Seiten des Gefahrenraums (8) angeordnet werden.

6. Verfahren nach Anspruch 3,
**dadurch gekennzeichnet, dass**
wenigstens ein Funkmodul (6) solche Funksignale empfängt und auswertet, die es nicht selbst ausgesendet hat.

7. Verfahren nach einem der oben genannten Ansprüche,
**dadurch gekennzeichnet , dass**
als Funkmodul (6) wenigstens ein WLAN-Router verwendet werden.

8. Verfahren nach einem der oben genannten Ansprüche,
**dadurch gekennzeichnet , dass**
zum Prüfen der Funktionsfähigkeit des wenigstens einen Funkmoduls (6) überwacht wird, ob bei einer geplanten Verletzung des Gefahrenraums (8) der Grenzwert überschritten wird.

9. Überwachungsvorrichtung (5) für einen Gefahrenraum (8) einer eisenbahntechnischen Anlage (1),
mit wenigstens einem Funkmodul (6), das im Gefahrenraum (8) anordenbar und zum Aussenden und Empfangen von Funksignalen ausgebildet ist, und
mit wenigstens einer Auswerteeinrichtung (7), die zum Auswerten der empfangenen Funksignale ausgebildet ist,
wobei die Auswerteeinrichtung (7) zum Ermitteln wenigstens eines Musters der empfangenen Funksignale in einem Grundzustand des Gefahrenraums (8) und zum Ermitteln von Unterschieden zu dem Muster im Grundzustand und zum Auslösen einer Reaktion ausgebildet ist, wenn die ermittelten Unterschiede einen vorbestimmten Grenzwert übersteigen,
**dadurch gekennzeichnet, dass**
die Überwachungsvorrichtung ausgebildet ist, nach einer ausgelösten Reaktion zu prüfen, ob eine geplante Verletzung des Gefahrenraums (8) vorliegt.

10. Überwachungsvorrichtung (5) nach Anspruch 9,
**dadurch gekennzeichnet , dass**
die Überwachungsvorrichtung (5) zum Ausführen des Verfahrens nach einem der Ansprüche 1 bis 8 ausgebildet ist.

11. Eisenbahntechnische Anlage (1),
**gekennzeichnet** d u r c h
die Überwachungsvorrichtung (5) nach Anspruch 9 oder 10.

12. Eisenbahntechnische Anlage (1) nach Anspruch 11,
**dadurch gekennzeichnet , dass**
das wenigstens eine Funkmodul (6) der Überwachungsvorrichtung (5) in einem Tunnel (4) der eisenbahntechnischen Anlage (1) angeordnet ist und der Tunnel (4) zumindest abschnittsweise den überwachten Gefahrenraum (8) ausbildet.

13. Computerprogrammprodukt mit Programmbefehlen zur Durchführung des Verfahrens nach einem der Ansprüche 1 bis 8.

14. Bereitstellungsvorrichtung für das Computerprogrammprodukt nach Anspruch 13, wobei die Bereitstellungsvorrichtung das Computerprogrammprodukt speichert und/oder bereitstellt.

## Claims

1. Method for monitoring a danger area (8) of a railway installation (1),
in which at least one radio module (6) is arranged in the danger area (8) or in the vicinity of the danger area (8),
in which radio signals are transmitted by the radio module (6),
in which radio signals are received and evaluated by the radio module (6),
wherein a pattern of the received radio signals is determined in a basic state of the danger area (8) and
when the radio signals are evaluated, differences from the pattern in the basic state are determined and a response is triggered if the differences determined exceed a predefined limit value
**characterised in that**
after a triggered response, it is checked whether there is a planned breach of the danger area (8).

2. Method according to claim 1,
**characterised in that**
it is checked on the basis of a schedule of the railway installation (1) whether there is a planned breach of the danger area (8).

3. Method according to one of the preceding claims,
**characterised in that**
a plurality of radio modules (6) are arranged and evaluated.

4. Method according to claim 3,
**characterised in that**
the radio modules (6) are arranged on the same side of the danger area (8).

5. Method according to claim 3,
**characterised in that**
the radio modules (6) are arranged on opposite sides of the danger area (8).

6. Method according to claim 3,
**characterised in that**
at least one radio module (6) receives and evaluates such radio signals which it has not transmitted itself.

7. Method according to one of the preceding claims,
**characterised in that**
at least one WLAN router is used as a radio module (6).

8. Method according to one of the preceding claims,
**characterised in that**
to check the functionality of the at least one radio module (6), it is monitored whether the limit value is exceeded in the event of a planned breach of the danger area (8).

9. Monitoring apparatus (5) for a danger area (8) of a railway installation (1),
having at least one radio module (6) which can be arranged in the danger area (8) and is designed to transmit and receive radio signals, and
having at least one evaluation facility (7) which is designed to evaluate the received radio signals,
wherein the evaluation facility (7) is designed to determine at least one pattern of the received radio signals in a basic state of the danger area (8) and to determine differences from the pattern in the basic state and to trigger a response if the differences determined exceed a predefined limit value, **characterised in that**
the monitoring apparatus (5) is designed after a triggered response to check whether there is a planned breach of the danger area

10. Monitoring apparatus (5) according to claim 9,
**characterised in that**
the monitoring apparatus (5) is designed for carrying out the method according to one of claims 1 to 8.

11. Railway installation (1),
**characterised by**
the monitoring apparatus (5) according to claim 9 or 10.

12. Railway installation (1) according to claim 11,
**characterised in that**
the at least one radio module (6) of the monitoring apparatus (5) is arranged in a tunnel (4) of the railway installation (1) and the tunnel (4) forms the monitored danger area (8) at least in sections.

13. Computer program product with program commands for carrying out the method according to one of claims 1 to 8.

14. Provisioning apparatus for the computer program product according to claim 13, wherein the provisioning apparatus stores and/or provides the computer program product.

## Revendications

1. Procédé de contrôle d'une zone (8) de danger d'une installation (1) de la technique des chemins de fer,
dans lequel on dispose au moins un module (6) radio dans la zone (8) de danger ou à proximité de la zone (8) de danger,
dans lequel on émet des signaux radio du module (6) radio,
dans lequel des signaux radio sont reçus par le module (6) radio et évalués,
dans lequel on établit un modèle des signaux radio reçus dans un état de base de la zone (8) de danger, et
lors de l'évaluation des signaux radio, on établit des différences par rapport au modèle dans l'état de base et on déclenche une réaction, si les différences établies dépassent une valeur limite déterminée à l'avance,
**caractérisé en ce qu'**
après le déclenchement d'une réaction, on contrôle s'il est porté une atteinte projetée à la zone (8) de danger.

2. Procédé suivant la revendication 1,
**caractérisé en ce qu'**
à l'aide d'un plan de circulation de l'installation (1) de la technique des chemins de fer, on contrôle s'il est porté une atteinte projetée à la zone (8) de danger.

3. Procédé suivant l'une des revendications précédentes, **caractérisé en ce que** l'
on dispose et évalue plusieurs modules (6) radio.

4. Procédé suivant la revendication 3,
**caractérisé en ce que** l'
on dispose les modules (6) radio du même côté de la zone (8) de danger.

5. Procédé suivant la revendication 3,
**caractérisé en ce que** l'
on dispose les modules (6) radio sur des côtés opposés de la zone (8) de danger.

6. Procédé suivant la revendication 3,
**caractérisé en ce qu'**
au moins un module (6) radio reçoit et évalue des signaux radio tels, qu'il n'a pas envoyés lui-même.

7. Procédé suivant l'une des revendications précédentes, **caractérisé en ce que** l'
on utilise comme module (6) radio, au moins un routeur WLAN.

8. Procédé suivant l'une des revendications précédentes, **caractérisé en ce que**
pour contrôler l'aptitude à fonctionner d'au moins un module (6) radio, on contrôle si, lors d'une atteinte projetée à la zone (8) de danger, la valeur limite est dépassée.

9. Installation (5) de contrôle d'une zone (8) de danger d'une installation (1) de la technique des chemins de fer,
comprenant au moins un module (6) radio, qui peut être disposé dans la zone (8) de danger et qui est constitué pour l'émission et la réception de signaux radio, et
comprenant au moins un dispositif (7) d'évaluation, qui est constitué pour l'évaluation des signaux radio reçus,
dans laquelle le dispositif (7) d'évaluation est constitué pour l'établissement d'au moins un modèle des signaux radio reçus dans un état de base de la zone (8) de danger et pour l'établissement de différences au modèle dans l'état de base et pour le déclenchement d'une réaction, si les différences établies dépassent une valeur limite déterminée à l'avance,
**caractérisée en ce que**
l'installation de contrôle est constituée pour contrôler, après déclenchement d'une réaction, s'il est porté une atteinte planifiée à la zone (8) de danger.

10. Installation (5) de contrôle suivant la revendication 9, **caractérisée en ce que**
l'installation (5) de contrôle est constituée pour l'exécution du procédé suivant l'une des revendications 1 à 8.

11. Installation (1) de la technique des chemins de fer,
**caractérisée par**
l'installation (5) de contrôle suivant la revendication 9 ou 10.

12. Installation (1) de la technique des chemins de fer suivant la revendication 11,
**caractérisée en ce que**
l'au moins un module (6) radio de l'installation (5) de contrôle est disposé dans un tunnel (4) de l'installation (1) de la technique des chemins de fer et le tunnel (4) constitue au moins par tronçon la zone (8) de danger contrôlée.

13. Produit de programme d'ordinateur comprenant des instructions de programme pour effectuer le procédé suivant l'une des revendications 1 à 8.

14. Dispositif de mise à disposition du produit de programme d'ordinateur suivant la revendication 13, dans lequel le dispositif de mise à disposition du produit met en mémoire et/ou à disposition le produit de programme d'ordinateur.
